# EUROPEAN PATENT SPECIFICATION

(11) **EP 3 172 478 B1**
(45) Date of publication and mention of the grant of the patent: **27.06.2018**
(21) Application number: 15753767.1
(22) Date of filing: 06.07.2015
(51) Int. Cl.: F16M 7/00, A47B 91/02

(54) **SUPPORT AND STABILIZATION FOOT OF HEAVY LOADS SUCH AS, PARTICULARLY, INDUSTRIAL MACHINES**
TRÄGER UND STABILISIERUNGSFUSS FÜR SCHWERE LASTEN WIE ETWA, INSBESONDERE, INDUSTRIELLE MASCHINEN
PIED DE SUPPORT ET DE STABILISATION DE CHARGES LOURDES TELLES QUE, EN PARTICULIER, DES MACHINES INDUSTRIELLES

(30) Priority: 23.07.2014 IT VR20140189
(43) Date of publication of application: 31.05.2017
(73) Proprietor: Four-Emme Production S.r.l. con Socio unico, 36051 Costa Volpino (BG) (IT)
(72) Inventor: BESENZONI, Ernesto, 24067 Sarnico (BG) (IT)
(74) Representative: Contadin, Giorgio
(86) International application number: PCT/IB2015/055085
(87) International publication number: WO 2016/012890

(56) References cited:
- US-A1- 2010 147 341
- US-A1- 2012 085 882

## Description

The present invention relates to a support and stabilization foot of heavy loads such as, particularly, industrial machines such as for instance conveyor belts, bakery machines and so on whose weight is measured in quintals and beyond.

As known, furniture, industrial machines, tripods, generators, compressors, shelves, appliances, fitness equipment for sport gyms or other technical and mechanical devices/objects are heavy loads resting on a plurality of support or base structures, commonly referred to as "foots", each insistent on the reference surface (the paving of a civil building or an industrial factory) and having the function of ensuring the stabilization (or stationing) of the element supported, making it immovable when it is stationary.

The types of support and stabilization foots currently available on the market are notoriously numerous, differing each other in size, shape, material of construction, hardness and colour. In general, a traditional support and stabilization foot comprises a main load bearing body variously shaped which, in applicative conditions, insist on a reference surface and is coupled through fastening means with a base framework of a heavy load of the type identified above by way of example.

Especially for delicate reference surfaces because of the quality of their surface finishing, such as a parquet, brick, marble or granite floor, the more sophisticated and more popular foots on the market are provided in the bottom part with an anti-slip, anti-vibration and antistain base, in general made of rubber, which is firmly coupled with the aforesaid main load bearing body in such a way as to remain in direct contact with the reference surface.

Prior art documents published as US 2010/147341 A1 and US 2012/085882 A1 show examples of support and stabilization leg of heavy loads having the technical features contained in the pre-characterizing part of the main independent claim attached to the present description. However, despite being available in a wide range of embodiments which satisfy the multiple application needs and while considering the full effectiveness with which they perform their stabilizing function of the heavy load they supported, foots of the prior art have the recognized drawback of not allow if not to hinder the movement of the heavy load without lifting it from the reference surface.

Indeed, when, for any reason (doing maintenance or cleaning the flooring or only changing the layout of a room or of an industrial factory), the heavy load has to be transported from one place to another (for example within a production factory), it is necessary to lift it from the reference surface and move it with a forklift (as it is colloquially called), an electric or manual pallet truck or, more generally, a generic elevator driven by a qualified and experienced operator, otherwise the real risk if not the certainty of ruining the reference surface.

It follows, then, that the operations of handling heavy loads, even only for short distances, are currently rather laborious and require prolonged periods of time and staff with proven experience to be effectively completed.

In any case, the continuous moving of the heavy load through the elevator device from one side compromises, even only minimally, the structural integrity of the reference surface and, on the other side, needs to be performed with extreme care and attention by the operator in order to avoid harmful impact of the elevator device itself against neighboring structures, machines, equipment, appliances and/or instruments as well as the far more dangerous and risky impacts against people who are in the environment or in the room where the heavy loads have to be moved.

Starting, therefore, from the knowledge of the aforesaid drawbacks of the current state of the prior art, the present invention intends to fully remedy to them.

In particular, main purpose of the invention is to provide a support and stabilization foot of heavy loads, particularly industrial machines, which, if necessary, allows the handling of the heavy loads themselves more easily compared to the current state of the art, in particular without the need to lift or totally separate the heavy loads from the reference surface - thus also keeping them only indirectly close to the reference surface - and without the need to make use of elevators to perform the manoeuvre.

It is then primary purpose of the present invention to make available a support and stabilization foot of heavy loads, particularly industrial machines, which compared with the prior art simplifies the operations required for moving the heavy loads from one location to another, without using in any way elevator devices.

Within the sphere of the aforesaid purpose, it is task of the present invention to devise a support and stabilization foot of heavy loads, particularly industrial machines, which allows to effectively handle the heavy loads themselves more quickly than what happens in the prior art.

It is another task of the invention to create a support and stabilization foot of heavy loads, particularly industrial machines, which allows even any, or in any case not necessarily and particularly expert, user/operator to handle effectively and in safety conditions the heavy loads concerned.

It is a last but not least purpose of the current invention to give substance to a support and stabilization foot of heavy loads, particularly industrial machines, which, during handling of the latter, preserves more than the prior art the structural integrity of the reference surface on which the heavy loads insist and safeguards more than the prior art the structural integrity of the surrounding equipment and the safety of the persons or staff present in the handle environment.

Said purposes are achieved through a support and stabilization foot of heavy loads such as, particularly, industrial machines according to claim 1 attached hereto, as hereinafter referred for the sake of brevity.

Further technical features of detail of the support and stabilization foot of heavy loads of the invention are expressed in the corresponding dependent claims.

The above-mentioned claims, hereinafter specifically and concretely defined, shall be meant as integral part of the present description.

Advantageously, the support and stabilization foot of heavy loads, subject of the invention, allows to handle the heavy loads themselves more easily and quickly the prior art, in particular without the need to lift or totally separate the heavy loads from the reference surface by means of lift trucks of various kinds.

During handling of the heavy loads which it is stably coupled in proper number with, becoming an integral part of it, the support and stabilization foot of the invention, indeed, remains always in contact with the reference surface.

This depends on the fact that the support and stabilization foot of the present invention includes translation means, coupled with a main load bearing body and operatively connected with actuation means, in turn coupled with the main body and adapted to be handled by the operator to position the translation means between a rest position, in which the translation means stably and totally remain within the overall dimensions defined by the main body, and an operating position in which the translation means stably remain projecting inferiorly and at least partly from the main body in such a way as to be in contact with the reference surface and allow the practical and effective moving of the heavy keeping it constantly in contact with the reference surface, by means of the support and stabilization foot itself integral thereto.

Still advantageously, contrary to what happens in the known art, the support and stabilization foot of the present invention also allows any, or in any case not particularly expert, qualified and vigorous user/operator to move in an effective manner, in safety conditions and with relatively low physical effort heavy loads, such as an industrial machine or a furniture.

Equally advantageously, during handling of heavy loads, the support and stabilization foot of the invention allows to preserve to a greater extent than the prior art as much the structural integrity of the reference surface on which the heavy loads stand as the structural integrity of the surrounding equipment and safety of persons or staff present in the handle environment, whose physical safety is thus better protected.

Said purposes and advantages shall appear to a greater extent from the detailed description which follows, relating to preferred embodiments of the support and stabilization foot of heavy loads, particularly industrial machines of the invention, given by indicative and illustrative, but not limitative, way with reference to the accompanying drawing tables in which:
- figure 1 is a side view of a first embodiment of the support and stabilization foot of the invention;
- figure 2 is a view in longitudinal section of figure 1;
- figure 3 is the exploded view of figure 2;
- figure 4 is a first constructive detail of figure 3;
- figure 5 is a second constructive detail of figure 3;
- figure 6 is a third constructive detail of figure 3;
- figure 7 is a forth constructive detail of figure 3;
- figure 8 is a view in longitudinal section of a second embodiment of the support and stabilization foot of the invention;
- figure 9 is the exploded view of figure 8;
- figure 10 is a first constructive detail of figure 9;
- figure 11 is the view rotated of 90° counterclockwise of the detail of figure 10;
- figure 12 is a second constructive detail of figure 9;
- figure 13 is a third construction detail of figure 9;
- figure 14 is a view in longitudinal section of a third embodiment of the support and stabilization foot of the invention;
- figure 15 is a longitudinal sectional view of a fourth embodiment of the support and stabilization foot of the invention;
- figure 16 is a side view of a constructive detail apart of figure 15.

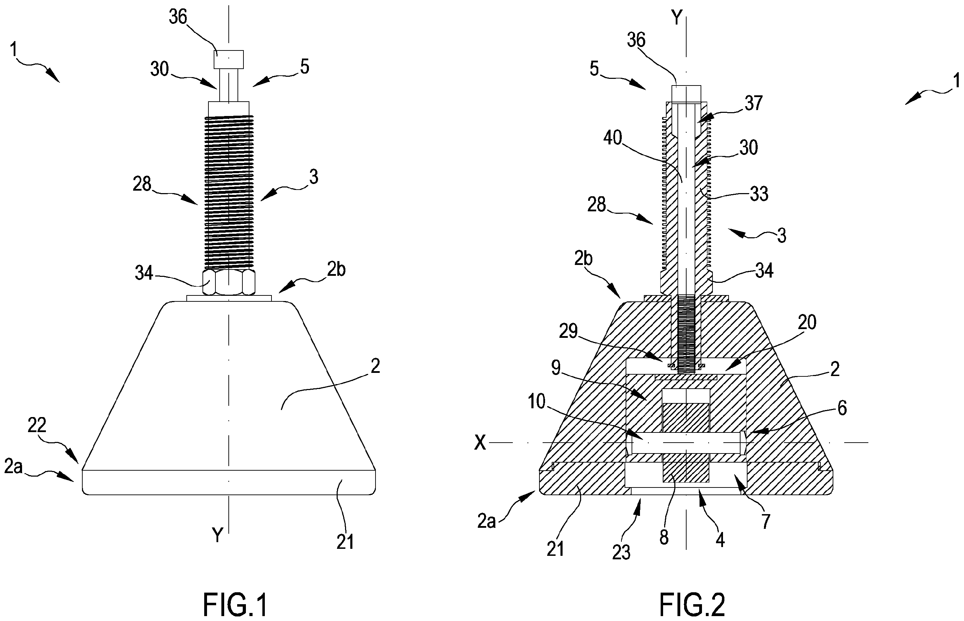

The support and stabilization foot of heavy loads such as, particularly, industrial machines such as for example conveyor belts for the bakery industry, is illustrated in figure 1 where it is globally numbered with 1.

As it can be observed, the support and stabilization foot 1 comprises a main load bearing body 2 (in the specific case having a frusto-conical profile) that, in applicative conditions, insists on a reference surface (not shown for simplicity) and is stably connected through fastening means, indicated as a whole with 3, with a base framework belonging to the heavy load, not shown for the sake of convenience.

In accordance with the invention, the support and stabilization foot 1 comprises translation means, visible in figure 2 where they are overall indicated with 4, coupled with the main load bearing body 2 and the operatively connected with actuation means, generally indicated with 5, coupled with the main load bearing body 2 and suitable to be handled by the operator to position the translation means 4 between a rest position, in which the translation means 4 remain firmly and totally contained into in the overall dimensions defined by the main load bearing body 2, and an operating position in which the translation means 4 stably remain inferiorly and at least partially projecting from the main load bearing body 2 and are in contact with the reference surface in order to allow the operator practice, immediate, direct and effective manual moving, by pushing or pulling, of the heavy load, without therefore the necessity to lift it, for example by means of forklifts, but keeping it constantly in contact, through the interposition of the aforesaid translation means 4, with the reference surface.

Basically, therefore, the actuation means 5 operate on the translation means 4 so as to arrange them stably in two distinct positions, the first one of which allows to effectively keep immovable the heavy load which the translation means 4 are coupled with and the second one of which allows to effectively move by means of simple manual pushing or pulling the heavy load which the translation means 4 are coupled with.

In particular way, the translation means 4 are coupled with the main load bearing body 2 through constrain means, indicated as a whole with 6, and are arranged at a central housing 7 communicating with the outside and made starting from the lower surface 2a of the main load bearing body 2: the translation means 4 are thus totally contained inside the central housing 7 when they assume the rest position.

Purely by preferential title, the translation means 4 are of the rolling type (rolling friction) and include an idle roll 8 defining a linear rotation axis X substantially horizontal and parallel to the plane defined by the reference surface.

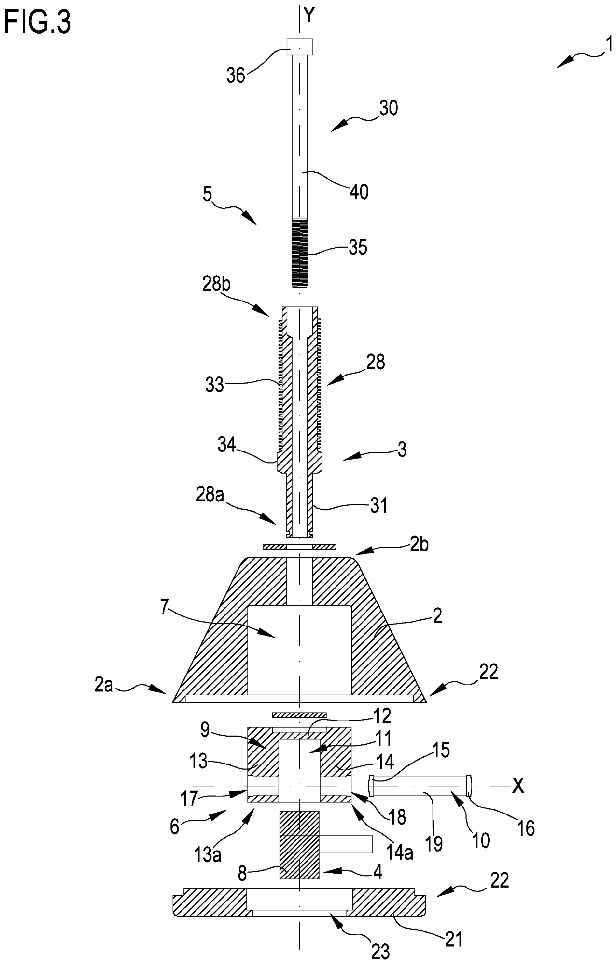

As figures 2 and 3 show, in preferred but not exclusive manner, the constrain means 6 comprise in this case:
- a coupling block 9 which in any position of the translation means 4 always remains at least partially contained into the central housing 7 of the main load bearing body 2 inside which is made sliding by precision by the actuation means 5;
- a transverse small shaft (or plug) 10 coupled with the coupling block 9, supporting the translation means 4 in such a way as to allow its rotation around a linear axis X substantially horizontal and parallel to the plane defined by the reference surface.

In the specific case, therefore, the linear axis X around which rotates the transverse small shaft 10 coincides with the linear rotation axis X of the idle roll 8 of the translation means 4 of the rolling type.

More in detail, in addition, the coupling block 9 presents a central seat 11 which develops coaxially to the central housing 7 and symmetrically with respect to a main longitudinal axis Y orthogonal to the linear axis X; the translation means 4 are at least partly housed into the central seat 11 in any operating position taken by them and are symmetrically arranged with respect to the main longitudinal axis Y.

Figure 3 shows that the coupling block 9 is preferably composed of a central portion 12 and two side portions 13, 14 facing and spaced apart each other, connected at one end through such a central portion 12 in such a way as to define the central seat 11 and to confer the coupling block 9 a profile which takes substantially the shape of an upset U, in cross-section and in applicative conditions.

Still figure 3 shows that the transverse small shaft 10 is provided with a pair of pins 15, 16 opposite each other, inserted into respective side through holes 17, 18 coaxial each other made one for each of the side portions 13, 14 of the coupling block 9, and a hub 19 placed in the central seat 11 of the coupling block 9.

More precisely, the side through holes 17, 18 are made near the free ends 13a, 14a of the side portions 13, 14 of the coupling block 9 in such a way that the idle roll 8, when the transverse small shaft 10 is coupled with and inserted into the central seat 11, defines an interstitial gap 20, having fixed size, with the inner wall of the central portion 12 of the coupling block 9 and also partly protrudes from the lower wall 13a, 14a of the side portions 13, 14 of the coupling block 9 itself.

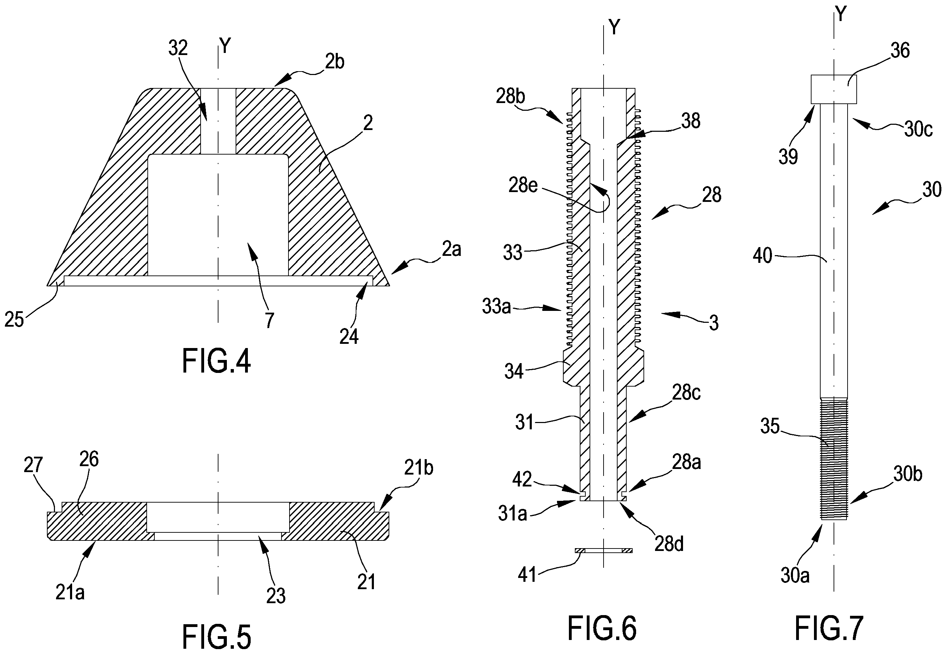

Preferably but not necessarily, the main load bearing body 2 is provided with an anti-slip and/or anti-vibration base 21, made of elastically yielding material such as rubber and coupled with the lower surface 2a of the main body 2 through joint means, as a whole reported with 22 and better visible in figures 4 and 5; in applicative and operative conditions, the base 21 is arranged close to the reference surface.

The anti-slip and/or anti-vibration base 21 has a through central aperture 23, symmetrically arranged relative to the main longitudinal axis Y and communicating with the central housing 7 of the main load bearing body 2: according to this construction, when the actuation means 5 position the translation means 4 in the rest position, completely re-entered with respect to the lower wall 21a of the ant-slip and/or anti-vibration base 21, the coupling block 9 and the translation means 4 are partly housed into the through central aperture 23, while, when the actuation means 5 gradually position the translation means 4 in the operating position, projecting from the lower wall 21a of the ant-slip and/or anti-vibration base 21, the translation means 4 pass through the through central aperture 23.

In relation to the joint means 22, by way of preferred but not binding title, they comprise:
- an annular groove 24 made in the lower surface 2a of the main body 2 around the central housing 7 and surrounded by a peripheral annular tooth 25;
- an annular tooth 26 projecting from the upper wall 21b of the ant-slip and/or anti-vibration base 21 around the through central opening 23 and surrounded by a peripheral annular recess 27 defined in the upper wall 21b of the anti-slip and/or anti-vibration base 21, such an annular tooth 26 grafting or matching into the annular groove 24 and the peripheral annular tooth 25 grafting or matching into peripheral annular recess 27.

According to the preferred embodiment described herein of the invention, the actuation means 5 belong to the fixing means 3 which in this case are especially suitable to allow to couple the and stabilization support foot 1 of the invention to heavy load keeping the first outside the overall dimensions of the second in such way to ease handle of the actuation means 5 by the operator.

In the constructive example under description, the actuation means 5 specifically comprise:
- a tubular connection element 28, visible apart in figure 6, stably coupled with the main load bearing body 2 through retention means, as a whole indicated with 29, and partially and axially projecting from the upper surface 2b of the main load bearing body 2;
- a thrust member 30, visible apart in figure 7, contained into the tubular connection element 28, axially movable at least between a passive position, in which the thrust member 30 is averted from the translation means 4 and protrudes from the upper end part 28b of the tubular connection element 28 in such a way that the translation means 4 take the rest position, and an active position, in which the lower edge 30a of the thrust member 30 is closed to and cooperates with the translation means 4 in such a way as to firmly keep them in the operating position, at least partially projecting from the lower surface 2a of the main load bearing body 2 and in contact with the reference surface.

In particular, the tubular connection element 28 is arranged along the main longitudinal axis Y, generally vertical as it can be observed in figures 1-3, and is provided with:
- a first portion 31, almost entirely contained into a through axial hole 32 which is made in the main body 2 and develops from the upper surface 2b of the latter towards the central housing 7 with which the through axial hole 32 communicates coaxially and in which the lower end 31a of the first portion 31 faces;
- a second portion 33 spaced apart from the first portion 31 by the interposition of an annular protrusion 34 which is arranged close to the upper surface 2b of the main load bearing body 2.

Figure 6 shows that, suitably but not exhaustively, the aforesaid first portion 31, the second portion 33 and the annular protrusion 34 are made in single body each other.

In this case, purely by way of example, the second portion 33 comprises on the outer surface 33a the fastening means 3 of the screw type which, as already mentioned, allow the stable coupling of the support and stabilization foot 1 of the current invention with the base framework of the heavy load concerned.

The retention means 29 are coupled with the lower end part 28a of the tubular connection element 28 in such a manner as to protrude from the main load bearing body 2 and to be contained within the central housing 7 defined in it.

In a preferred but not limited way, the retention means 29 include a lock washer 41 partly housed into an annular groove 42 having an open profile made in the outer side wall 28c of the tubular connection member 28 in such a manner that the lock washer 41 protrudes from such an outer side wall 28c and, when required, contrasts with its own upper face against the base edge 28d of the tubular connection member 28, preventing the separation of the tubular connection member 28 from the main load bearing body 2.

The thrust member 30 is movable axially, in this case due to its rotation around the main longitudinal axis Y imparted by the operator, being provided with:
- a threaded surface stretch 35 which is arranged at a first end 30b (comprising the lower edge 30a) of the thrust member 30 and progressively engages a nut screw, not shown, made in the first portion 31 of the tubular connection element 28 when the trust member 30 passes from the passive position to the active position and the translation means 4 pass from the rest position to the operating position;
- a handle head 36 which is arranged at a second end 30c, opposite the first end 30b, of the thrust member 30 and which can be operated in rotation by the operator by means of a tool of the type known per se to the person skilled in the art, such as for example a key of the Allen type.

Advantageously, the actuation means 5 also comprise end-of-stroke means, indicated overall with 37, having the function of arresting the axial stroke of the thrust member 30 towards the central housing 7 of the main load bearing body 2 and, consequently, the axial stroke of the translation means 4 downwardly and outside of the main load bearing body 2.

Preferably but not exclusively, the end-of-stroke means 37 comprise:
- a sloped annular wall 38, made in the inner wall 28e and at the upper end part 28b of the tubular connection member 28 in such a way as to converge from the inner wall 28e towards the main longitudinal axis Y;
- an annular undercut 39 defined between the handle head 36 and the central stem 40 of the thrust member 30.

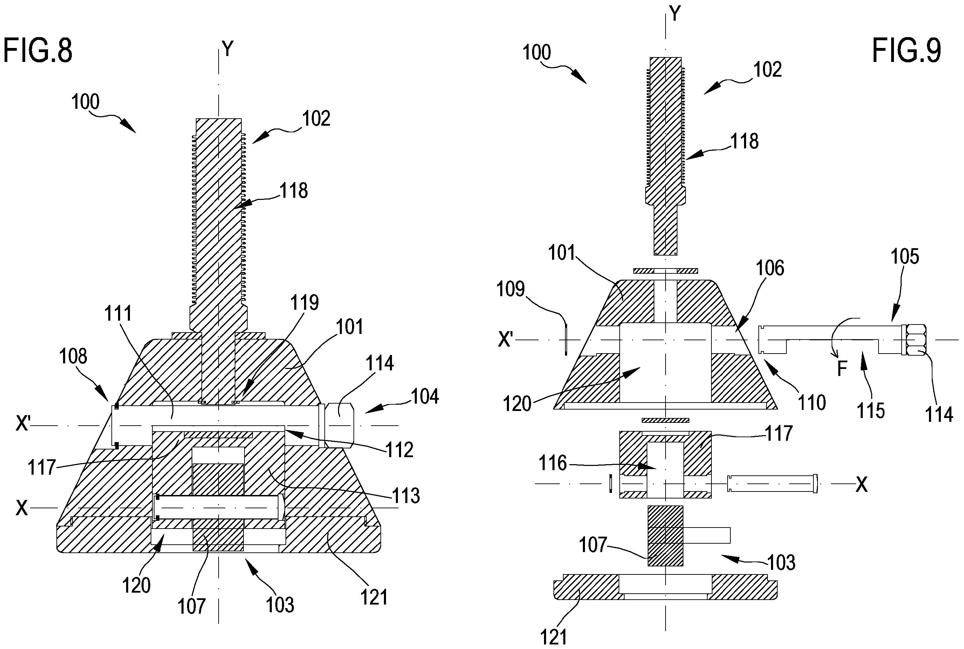

Figures 8 and 9 emphasize a second possible embodiment of the invention, in which the support and stabilization foot, now globally numbered with 100, differs from the support and stabilization foot 1 just described by the composition of the actuation means, as a whole numbered with 104.

In this case, indeed, the actuation means 104 are spaced apart and distinct from the fastening means, as a whole numbered with 102, by means of which the main load bearing body 101, in applicative conditions, is stably coupled with the base framework of a heavy load.

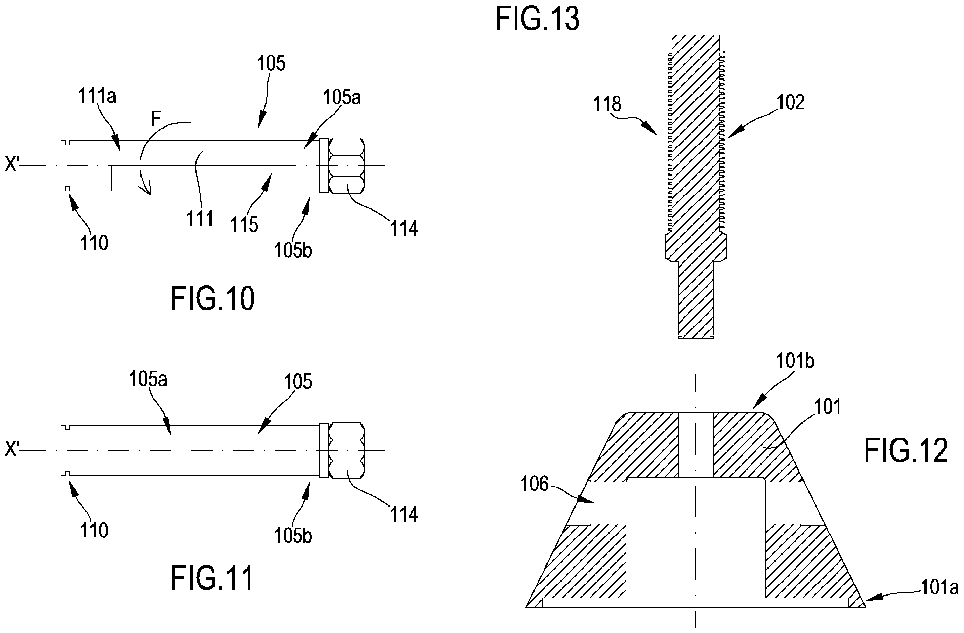

More specifically, according to the invention, the actuation means 104 comprise a transverse pin 105 (visible apart in figures 10 and 11) at least partly inserted into a longitudinal slot 106, well visible in figure 12, made in the main load bearing body 101 and movable at least between a passive position, in which the transverse pin 105 is averted from the translation means, as a whole numbered with 103, in such a way that the translation means 103 take the rest position, and an active position, in which the outer wall 105a of the transverse pin 105 cooperates with the translation means 103 keeping them in the operating position, at least partially projecting from the lower surface 101a of the main load bearing body 101.

More in detail, the transverse pin 105 is disposed in the longitudinal slot 106 along an auxiliary longitudinal rotation axis X' substantially horizontal and parallel to the linear rotation axis X around which the idle roll 107 rotates.

In addition, the transverse pin 105 is firmly coupled with the main load bearing body 101 through locking means, indicated as a whole with 108, substantially equivalent to or using the same technical principle of the retention means 29 described above in relation to the support and stabilization foot 1 (see in this respect the lock washer 109 and the annular groove 110 in figure 9).

The transverse pin 105 is rotatably movable as a result of its rotation around the auxiliary longitudinal axis X', being provided with, as illustrated by figure 9:
- a main portion 111 contained into the longitudinal slot 106 and which, in the rest position of the translation means 103, is coupled with the translation means 103 themselves through key means, overall indicated with 112; moreover, the main portion 111 presents an outer surface 111a progressively cooperating with the coupling block 113 when the transverse pin 105 passes from the passive position to the active position and the translation means 103 pass from the rest position to the operating position;
- a handle head 114 arranged at a first end 105b of the transverse pin 105 and accessible from the outside in order to be operated in rotation by the operator by means of a tool, such as a fork, ring, combined, T-shaped handle key and so on.

Preferably but not necessarily, the key means 112, which operate as said in the rest position of the actuation means 103, include:
- a central notch 115 made in the outer surface 111a of the main portion 111 of the transverse pin 105 and arranged symmetrically with respect to the main longitudinal axis Y, coaxial to the central seat 116 of the coupling block 113;
- a head portion 117 of the coupling block 113, conjugated in the aforesaid central notch 115.

A further constructive difference between the support and stabilization foot 100 under description and the support and stabilization foot 1 already described relates to the construction conception of the fastening means 102 through which the main load bearing body 101 is coupled with the heavy load.

As it can be seen in figure 13, the fastening means 102 are still of the screw type but made in the outer surface 118a of a connecting bar 118 which in this case is monolithic and not tubular: moreover, the connection bar 118 presents the same profile of the tubular connection element 28, also in this case partly and axially protrudes from the upper surface 101b of the main load bearing body 101 and is stably coupled with the main load bearing body 101 through the same retention means, numbered as a whole with 119, already previously described for the tubular connection element 28.

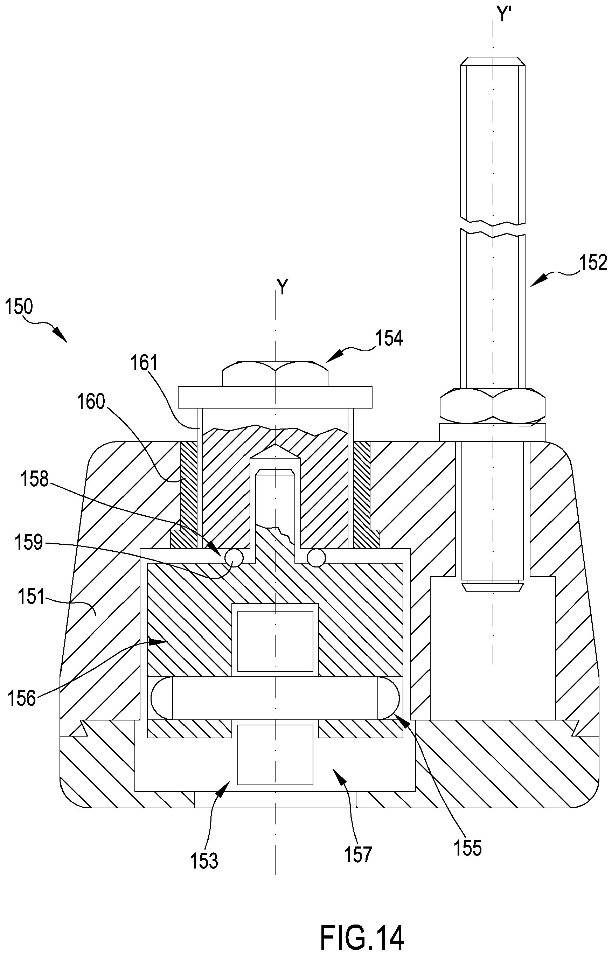

For constructive conception, the support and stabilization foot 100 of the invention can be applied to very heavy loads, particularly industrial machines, remaining confined within the overall dimensions of the latter, then below to them: operation of the translation means 103 by the operator takes place in this case laterally to the main load bearing body 101, unlike to what occurs with the support and stabilization foot 1 in which operation of the translation means 4 takes place axially and in general superiorly to the main load bearing body 2. Subsequent figure 14 shows a further embodiment of the invention in which the support and stabilization foot of heavy loads, now globally numbered with 150, differs from those ones previously described and indicated with 1 and 100 mainly in that it also comprises rotation means, indicated on the whole with 158, operatively connected with the main load bearing body 151 and mechanically cooperating with the translation means 153 in order to make them pirouetting and freely revolving in the space and thus allow, advantageously, to move the heavy load in any direction.

In particular, the rotation means 158 comprise in this specific case a projecting balls-recirculation bearing 159, interposed between the coupling block 156 of the fastening means, as a whole numbered with 155, and the actuation means, overall indicated with 154, with both of which it always remains in contact and contained into the central housing 157 of the main load bearing body 151.

Another salient constructive difference between the support and stabilization foot 150 and those ones 1 and 100 already described above concerns the position and composition of the actuation means 154 that in this embodiment do not belong to the fastening means, as a whole reported with 152, with which the support and stabilization foot 150 of the invention is coupled with the heavy load: in particular, the main longitudinal axis Y defined by the actuation means 154 is distinct and spaced apart from the auxiliary longitudinal axis Y' parallel thereto defined by the fastening means 152, as it can be well derived from figure 14. In any case, this embodiment of the invention also shows how it is advantageously possible to keep the support and stabilization foot 150 outside the overall dimensions of the heavy load in order to facilitate the handle by the operator of the actuation means 154.

More in detail, the tubular connection element 160 of the actuation means 154 is properly a threaded bushing permanently coupled with the main load bearing body 151 through retention means, not shown for simplicity, arranged along the main longitudinal axis Y and partly and axially protruding from the main load bearing body 151 by an abutment flange, also not represented.

The actuation means 154 also comprise a thrust member 161 externally threaded engaging in the nut screw of the threaded bushing 160: it presents a construction and a functionality entirely equivalent to those ones of the thrust member 30 of the foot 1 described before.

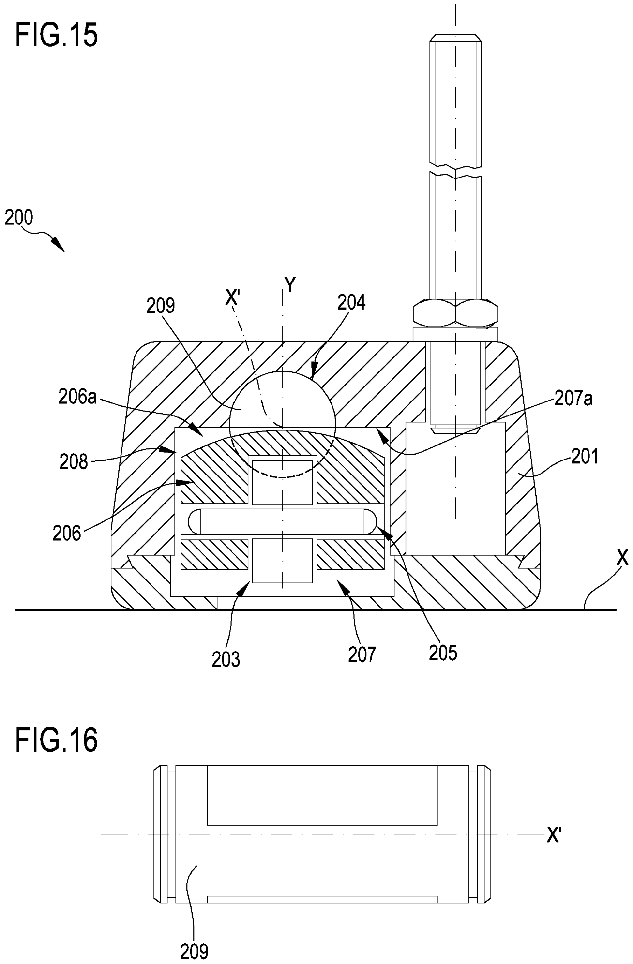

The last two figures 15 and 16 attached, finally, illustrate a further alternative embodiment of the invention in which the support and stabilization foot, now globally numbered with 200, differs from that one just described and indicated with 150 for the constructive composition so much of the rotation means, overall indicated with 208, as of the actuation means, overall indicated with 204 and, anyway, quite similar to the actuation means 104 of the second embodiment of the invention previously described with specific reference to figures 8-12.

In detail, the rotation means 208 comprise a mechanical coupling with slight clearance between the coupling block 206 and the main load bearing body 201, having the function of allowing the free rotation in the space of the coupling block 206 itself (belonging to the constrain means, overall indicated with 205) around the main longitudinal axis Y orthogonal to the linear axis X substantially horizontal and parallel to the plane defined by the reference surface (such as the paving of an industrial factory).

Preferably but not necessarily, the coupling block 206 has a slightly convex upper wall 206a cooperating by contact with the bottom portion 207a delimiting the central housing 207 and which eases rotation of the coupling block 206 around the aforesaid main longitudinal axis Y. Also in this case, under operating and installation conditions, the support and stabilization foot 200 remains outside the overall dimensions of the heavy load in order to facilitate the handle by the operator of the actuation means 204, of which figure 16 shows the transverse pin 209, rotatably movable as a result of its rotation around the auxiliary longitudinal axis X' imprinted by the operator by means of a tool of the type per se known.

Operatively, the heavy load, especially an industrial machine, is set up with an appropriate number of support and stabilization foots of the invention, for example of the type indicated by 1 or 100, which take the operating configuration of figure 1 and of figure 8, respectively, in which the translation means 4, 103, in this case the respective idle roll 8, 107, firmly take the rest position which provides stability for the heavy load, ensuring its immobility.

When for any reason, for example for a layout change or the need to perform maintenance and/or cleaning works of the environment where it is positioned, the heavy load has to be moved, the operator operates on the actuation means 5 and 104 so as to firmly dispose the translation means 4, 103 in the operating position, in which remain protruding from the lower surface 2a, 101a of the main load bearing body 2, 101 and constantly in contact, by the interposition of the aforesaid translation means 4, 103, with the reference surface, thus allowing the convenient, smooth and rapid manual handling of the heavy load, even by an inexperienced operator, without resorting to elevator devices, as it happens in the known art. In particular, the operator actuates the actuation means 5 by means of a tool such as for example an Allen key (not shown), progressively tightening the threaded surface stretch 35 of the thrust member 30 in the nut screw present in the first portion 31 of the tubular connection element 28, thus determining the downward movement of the thrust member 30 which firstly intercepts, with its lower edge 30a, the upper part of the coupling block 9 and subsequently causes the downward sliding, inside the central housing 7, of the coupling block 9 itself and, with it, of the translation means 4 integral with it.

The downward axial movement of the thrust member 30 is stopped by the end-of-stroke means 37, in particular when the annular undercut 39 defined between the handle head 36 and the central stem 40 of the thrust member 30 interferes with the sloped annular wall 38 present in the inner wall 28e of the tubular connection element 28.

When the operator (or more operators, if necessary, depending on the weights involved) has moved manually the heavy load up to the desired position, in which the heavy load itself must be stably kept although only for a limited time, the operator, always by means of the aforesaid tool, rotates the thrust member 30 in the direction opposite to the previous one, by unscrewing and fully releasing the threaded surface stretch 35 from the nut screw of the first portion 31 of the tubular connection element 28 and by arranging not only the handle head 36 but also a large part of the central stem 40 of the thrust member 30 axially projecting from the upper end part 28b of the tubular connection element 28.

In such a way, the weight force of the heavy load causes the upwardly sliding, along the main longitudinal axis Y, of the translation means 4 until their full return inside the central housing 7 of the main load bearing body 2 and until the resulting direct support of the anti-slip base 21 on the reference surface, which ensures the stable immobility of the heavy load. Similarly, the operator actuates the actuation means 104 by a tool such as a metric or Anglo-Saxon (not shown) key, by rotating 90°, for example in the direction indicated by the arrow F in figures 9 and 10, the transverse pin 105 which thus passes from the position of figure 10 to the position of figure 11: as a result, the coupling block 113 is disengaged from the retention means 119 and made sliding downwardly inside the central housing 120.

The further result of the initial rotational movement of the transverse pin 105 around the linear axis X is given by the fact that the translation means 103, yet of the rolling type and comprising the idle roll 107, are arranged projecting from the lower surface 101a of the main load bearing body 101, directly in contact with the reference surface and ready to allow the rapid, easy and immediate handling of the heavy load which they are stably coupled with. At the time when the heavy load has been manually moved until the desired location, in which it must firmly remain although only for a limited time, the operator, always through the tool mentioned above, rotates by 90° the transverse pin 105 in direction opposite to that one indicated in figure 9 by the arrow F (in this case, then, clockwise), freeing the coupling block 113 by the thrust of the outer wall 105a of the transverse pin 105 and causing the automatic insertion of the head portion 117 of the grouping block 113 in the central notch 115, once again determined by the weight force of the heavy load.

Even in this second embodiment, therefore, the weight force of the heavy load causes the upwardly sliding, along the main longitudinal axis Y, of the translation means 103 until their fully return inside the central housing 120 of the main load bearing body 101 and until the consequent direct support of the anti-slip base 121 on the reference surface, aspect which ensures the stable immobility of the heavy load.

The operation of the further embodiments of the support and stabilization foot 150 and 200 of the invention is evident, at the light of what has just been explained for the embodiments of support and stabilization foot 1 and 100 according to the invention: in addition, however, the support and stabilization foots 150 and 200 allow the operator to manually handle the heavy load freely in space, in any direction, making manoeuvres more simple and rapid which, for any requirement, must be carried out to move such a heavy load from a location to another within an industrial factory.

This thanks to the presence of the rotation means 158 and 208, operatively connected with the related main load bearing body 151 and 201, mechanically cooperating with the relative translation means 153 and 203 to make them pirouetting and freely revolving in space.

By virtue of the description just exposed, it is understood, therefore, that the support and stabilization foot of heavy loads, particularly industrial machines, of the present invention achieves the intended purposes and reaches the advantages previously mentioned.

Upon execution, changes could be made to the support and stabilization foot of heavy loads such as, particularly, industrial machines, of the invention consisting, for instance, in translation means differing from those ones yet described: for example, the translation means could be of the sliding type (sliding friction) and include shaped sliding blocks made of plastic material with high mechanical resistance and high smoothness, with reduced sliding friction coefficient.

In addition, in other constructive embodiments of the support and stabilization foot of heavy loads such as, particularly, industrial machines, of the invention, not represented, the main load bearing body could present a constructive conception, in particular a profile, different from that one described above and obtainable by the accompanying figures.

It is, finally, clear that several other changes could be made to the support and stabilization foot of heavy loads concerned, without departing from the principle of novelty intrinsic in the inventive idea expressed herein, as it is clear that, in the practical implementation of the invention, materials, shapes and sizes of the illustrated details could be changed, as needed, and replaced with others technically equivalent.

Where the constructive features and techniques mentioned in the following claims are followed by reference numbers or signs, those reference signs have been introduced with the sole objective of increasing the intelligibility of the claims themselves and therefore they have no limiting effect on the interpretation of each element identified, by way of example only, by these reference signs.

## Claims

1. Support and stabilization foot (1; 100; 150; 200) of heavy loads such a, particularly, industrial machines, comprising:
- a main load bearing body (2; 101; 151; 201) which, in applicative conditions, is suitable to insist on a reference surface and to be firmly coupled with a base framework of a heavy load through fastening means (3; 102; 152);
- translation means (4; 103; 153; 203) coupled with said main load bearing body (2; 101, 151; 201) and operatively connected with actuation means (5; 104; 154; 204), coupled with said main load bearing body (2; 101; 151; 201) and suitable to be handled by the operator to position said translation means (4; 103; 153; 203) between a rest position, in which said translation means (4; 103, 153; 203) are totally contained into the overall dimensions defined by said main load bearing body (2; 101; 151; 201), and an operating position in which said translation means (4; 103; 153; 203) firmly remain projecting inferiorly and at least partly from said main load bearing body (2; 101, 151; 201) and are in contact with said reference surface to allow the operator immediate manual moving of said heavy load,
**characterized in that**
said translation means (4; 103; 153; 203) are coupled with said main load bearing body (2; 101; 151; 201) through constrain means (6; 155; 205) and are arranged at a central housing 7; 120; 157; 207) communicating with the outside and made starting from the lower surface (2a; 101a) of said main body (2; 101, 151; 201), said translation means (4; 103; 153) being totally contained in said central housing (7; 120, 157; 207) when they take said rest position, wherein
said actuation means (104; 204) comprise a transverse pin (105; 209) at least partly inserted into a longitudinal slot (106) made in said main load bearing body (101; 201) and movable at least between a passive position, in which said transverse pin (105; 209) is averted from said translation means (103; 203) in such a way that said translation means (103; 203) take said rest position, and an active position, in which the outer wall (105a) of said transverse pin (105; 209) cooperates with said translation means (103; 203) keeping them in said operating position, at least partly projecting from said lower surface (101a) of said main load bearing body (101; 201).

2. Foot (1; 100; 150; 200) according to claim 1), **characterized in that** said translation means (4; 103; 153; 203) comprise an idle roll (8; 107) defining a linear rotation axis (X) substantially horizontal and parallel to the plane defined said reference surface.

3. Foot (1; 100; 150; 200) according to claim 1) or 2), **characterized in that** said constrain means (6; 155; 205) comprise:
- a coupling block (9; 113; 156; 206) which in any position of said translation means (4; 103; 153; 203) remains always at least partly contained into said central housing (7; 120; 157; 207) of said main load bearing body (2; 101; 151; 201) inside which said coupling block (9; 113; 156; 206) is made sliding by said actuation means (5; 104; 154; 204);
- a transverse small shaft (10) coupled with said coupling block (9; 113; 156; 206), supporting said translation means (4; 103; 153; 203) in such a way as to allow rotation around a linear axis (X) substantially horizontal and parallel to the plane defined by said reference surface.

4. Foot (1; 100; 150; 200) according to claim 3), **characterized in that** said coupling block (9; 113; 156; 206) presents a central seat (11; 116) which develops coaxially to said central housing (7; 120; 157; 207) and symmetrically with respect to a main longitudinal axis (Y) orthogonal to said linear axis (X) and into which said translation means (4; 103; 153; 203) are at least partly housed in any operating position, symmetrically arranged respect to said main longitudinal axis (Y).

5. Foot (1; 100; 150; 200) according to claim 4), **characterized in that** said coupling block (9; 113; 156; 206) is composed of a central portion (12) and two side portions (13, 14) facing and spaced part each other, connected at an end through said central portion (12) in such a way as to define said central seat (11; 116) and to confer said coupling block (9; 113; 156; 206) a profile substantially in the shape of an upset U, in transverse section and applicative conditions.

6. Foot (150; 200) according to any of the preceding claims, **characterized in that** it comprises rotation means (158; 208) operatively connected with said main load bearing body (151; 201) and mechanically cooperating with said translation means (153; 203) in order to make them pirouetting and freely revolving in the space and thus allow to move said heavy load in any direction.

7. Foot (150) according to claim 6) when claim 6) depends on claim 3), **characterized in that** said rotation means (158) comprise a projecting balls-recirculation bearing (159), interposed between said coupling block (156) and said actuation means (154) with which is always in contact and contained into said central housing (157) of said main load bearing body (151).

8. Foot (200) according to claim 6) when claim 6) depends on claim 3), **characterized in that** said rotation means (208) comprise a mechanical coupling with slight clearance between said coupling block (206) and said main load bearing body (201), said mechanical coupling being suitable to allow rotation of said coupling block (206) around a main longitudinal axis (Y) orthogonal to said linear axis (X) substantially horizontal and parallel to the plane defined by said reference surface.

9. Foot (200) according to claim 8), **characterized in that** said coupling block (206) presents an upper wall (206a) slightly convex suitable to a favour rotation of said coupling block (206) around said main longitudinal axis (Y).

10. Foot (1; 100; 150; 200) according to any of the preceding claims, **characterized in that** said main load bearing body (2; 101; 151; 201) is provided with an anti-slip and/or anti-vibration base (21; 121) suitable to be arranged close to said reference surface and coupled through joint means (22) with the lower surface (2a; 101a) of said main load bearing body (2; 101; 151; 201).

11. Foot (1; 100; 150; 200) according to claim 10) when claim 10) depends on claim 4), **characterized in that** said anti-slip and/or anti-vibration base (21; 121) presents a through central aperture (23), symmetrically arranged with respect to said main longitudinal axis (Y) and communicating with said central housing (7; 120; 157; 207) of said main load bearing body (2; 101; 151; 201), said coupling block (9; 113; 156; 206) and said translation means (4; 103; 153; 203) being partly housed into said through central aperture (23) when said actuation means (5; 104; 154; 204) position said translation means (4; 103; 153; 203) in said rest position, totally re-entered with respect to lower wall (21a) of anti-slip and/or anti-vibration base (21; 121), and said translation means (4; 103; 153; 203) passing through said through central aperture (23) when said actuation means (5; 104; 154; 204) position said translation means (4; 103; 153; 203) in said operating position, projecting from said lower wall (21a) of said anti-slip and/or anti-vibration base (21; 121).

12. Foot (100; 200) according to claim 4), **characterized in that** said transverse pin (105; 209) is revolvingly movable as a result of its rotation around an auxiliary longitudinal axis (X') substantially parallel to said linear rotation axis (X), being provided with:
- a main portion (111) which is contained into said longitudinal slot (106) and which, in said rest position of said translation means (103; 203), is coupled with said translation means (103; 203) through key means (112) and which presents an outer surface (111a) progressively cooperating with said coupling block (113; 206) when said transverse pin (105; 209) passes from said passive position to said active position and said translation means (103; 203) pass from said rest position to said operating position;
- a handle head (114) arranged at a first end (105b) of said transverse pin (105; 209) and accessible from the outside in order to be operated in rotation by the operator by means of a tool.

13. Foot (100; 200) according to claim 12), **characterized in that** key means (112) include:
- a central notch (115) made in said outer surface (111a) of said main portion (111) of said transverse pin (105; 209) and arranged symmetrically with respect to said main longitudinal axis (Y), coaxial to said central seat (116) of said coupling block (113; 206);
- a head portion (117) of said coupling block (113; 206), conjugated into said central notch (115).

## Patentansprüche

1. Stütz- und Stabilisierungsfuß (1; 100; 150; 200) für Schwerlasten, wie insbesondere Industriemaschinen, umfassend:
- einen Hauptlastlagerkörper (2; 101; 151; 201), der unter Anwendungsbedingungen dazu geeignet ist, auf einer Referenzfläche zu stehen und fest mit einem Basisrahmen einer Schwerlast durch ein Befestigungsmittel (3; 102; 152) gekoppelt zu sein;
- ein Verstellmittel (4; 103; 153; 203), das mit dem Hauptlastlagerkörper (2; 101; 151; 201) gekoppelt und funktional mit einem Betätigungsmittel (5; 104; 154; 204) verbunden ist, das mit dem Hauptlastlagerkörper (2; 101; 151; 201) gekoppelt und zur Handhabung durch einen Bediener geeignet ist, um das Verstellmittel (4; 103; 153; 203) zwischen einer Ruheposition, in der das Verstellmittel (4; 103; 153; 203) vollständig innerhalb der Gesamtabmessungen enthalten ist, die von dem Hauptlastlagerkörper (2; 101; 151; 201) definiert sind, und einer Betriebsposition zu positionieren, in der das Verstellmittel (4; 103, 153; 203) fest verbleibt, wobei es nach unten und zumindest teilweise von dem Hauptlastlagerkörper (2; 101, 151; 201) vorragt und in Kontakt mit der Referenzfläche steht, um dem Bediener eine unmittelbare manuelle Bewegung der Schwerlast zu ermöglichen,
**dadurch gekennzeichnet, dass**
das Verstellmittel (4; 103; 153; 203) mit dem Hauptlastlagerkörper (2; 101; 151; 201) durch ein Beschränkungsmittel (6; 155; 205) gekoppelt und an einem Zentralgehäuse (7; 120; 157; 207) angeordnet ist, das mit der Außenseite kommuniziert und von der unteren Fläche (2a; 101a) des Hauptkörpers (2; 101, 151; 201) ausgehend ausgebildet ist, wobei das Verstellmittel (4; 103; 153) vollständig in dem Zentralgehäuse (7; 120, 157; 207) aufgenommen ist, wenn es die Ruheposition einnimmt, wobei das Betätigungsmittel (104; 204) einen Querstift (105; 209) umfasst, der zumindest teilweise in einen Längsschlitz (106) eingesetzt ist, der in dem Hauptlastlagerkörper (101; 201) hergestellt ist und zumindest zwischen einer passiven Position, in der der Querstift (105; 209) von dem Verstellmittel (103; 203) auf eine Weise abgewendet ist, dass das Verstellmittel (103; 203) die Ruheposition einnimmt, und einer aktiven Position bewegbar ist, in der die Außenwand (105a) des Querstifts (105; 209) mit dem Verstellmittel (103; 203) zusammenwirkt, wobei diese in der Betriebsposition gehalten werden, wobei sie zumindest teilweise von der unteren Fläche (101a) des Hauptlastlagerkörpers (101; 201) vorragen.

2. Fuß (1; 100; 150; 200) nach Anspruch 1, **dadurch gekennzeichnet, dass** das Verstellmittel (4; 103; 153; 203) eine Leerlaufrolle (8; 107) umfasst, die eine lineare Rotationsachse (X) definiert, die im Wesentlichen horizontal und parallel zu der durch die Referenzfläche definierten Ebene liegt.

3. Fuß (1; 100; 150; 200) nach einem der Ansprüche 1 oder 2, **dadurch gekennzeichnet, dass** das Beschränkungsmittel (6; 155; 205) umfasst:
- einen Kopplungsblock (9; 113; 156; 206), der in jeder Position des Verstellmittels (4; 103; 153; 203) stets zumindest teilweise in dem Zentralgehäuse (7; 120; 157; 207) des Hauptlastlagerkörpers (2; 101; 151; 201) enthalten bleibt, innerhalb dem der Kopplungsblock (9; 113; 156; 206) verschiebbar durch das Betätigungsmittel (5; 104; 154; 204) ausgebildet ist;
- eine kleine Querwelle (10), die mit dem Kopplungsblock (9; 113; 156; 206) gekoppelt ist und das Verstellmittel (4; 103; 153; 203) auf solche Weise stützt, dass eine Rotation um eine Linearachse (X) ermöglicht wird, die im Wesentlichen horizontal und parallel zu der durch die Referenzfläche definierten Ebene liegt.

4. Fuß (1; 100; 150; 200) nach Anspruch 3, **dadurch gekennzeichnet, dass** der Kopplungsblock (9; 113; 156; 206) einen zentralen Sitz (11; 116) aufweist, der sich koaxial zu dem Zentralgehäuse (7; 120; 157; 207) entwickelt und symmetrisch in Bezug auf eine Hauptlängsachse (Y) orthogonal zu der Linearachse (X) angeordnet ist und in der das Verstellmittel (4; 103; 153; 203) zumindest teilweise in jeder Betriebsposition untergebracht ist, wobei es symmetrisch in Bezug auf die Hauptlängsachse (Y) angeordnet ist.

5. Fuß (1; 100; 150; 200) nach Anspruch 4, **dadurch gekennzeichnet, dass** der Kopplungsblock (9; 113; 156; 206) aus einem Zentralabschnitt (12) und zwei Seitenabschnitten (13, 14) besteht, die zueinander weisen und voneinander beabstandet sind, an einem Ende durch den Zentralabschnitt (12) auf solche Weise verbunden sind, um den Zentralsitz (11; 116) zu definieren und dem Kopplungsblock (9; 113; 156; 206) ein Profil verleihen, dessen Form im Querschnitt und unter Anwendungsbedingungen im Wesentlichen einem umgedrehten U entspricht.

6. Fuß (150; 200) nach einem der vorhergehenden Ansprüche, **dadurch gekennzeichnet, dass** er ein Rotationsmittel (158; 208) umfasst, das mit dem Hauptlastlagerkörper (151; 201) funktional verbunden ist und mechanisch mit dem Verstellmittel (153; 203) zusammenwirkt, um zu veranlassen, dass sich diese gemeinsam und frei in dem Raum drehen, wodurch ermöglicht wird, dass die Schwerlast in jeder Richtung bewegt werden kann.

7. Fuß (150) nach Anspruch 6, wenn Anspruch 6 von Anspruch 3 abhängig ist, **dadurch gekennzeichnet, dass** das Rotationsmittel (158) ein Rezirkulationslager (159) mit vorragenden Kugeln umfasst, das zwischen dem Kopplungsblock (156) und dem Betätigungsmittel (154) angeordnet ist, mit dem es stets in Kontakt steht und in dem Zentralgehäuse (157) des Hauptlastlagerkörpers (151) enthalten ist.

8. Fuß (200) nach Anspruch 6, wenn Anspruch 6 von Anspruch 3 abhängig ist, **dadurch gekennzeichnet, dass** das Rotationsmittel (208) eine mechanische Kopplung mit geringfügigem Zwischenraum zwischen dem Kopplungsblock (206) und dem Hauptlastlagerkörper (201) umfasst, wobei die mechanische Kopplung geeignet ist, eine Rotation des Kopplungsblocks (206) um eine Hauptlängsachse (Y) orthogonal zu der Linearachse (X) im Wesentlichen horizontal und parallel zu der durch die Referenzfläche definierten Ebene zu ermöglichen.

9. Fuß (200) nach Anspruch 8, **dadurch gekennzeichnet, dass** der Kopplungsblock (206) eine obere Wand (206a) aufweist, die geringfügig konvex und für eine günstige Rotation des Kopplungsblocks (206) um die Hauptlängsachse (Y) geeignet ist.

10. Fuß (1; 100; 150; 200) nach einem der vorhergehenden Ansprüche, **dadurch gekennzeichnet, dass** der Hauptlastlagerkörper (2; 101; 151; 201) mit einer an die Schlupf- und/oder Antivibrationsbasis (21; 121) versehen ist, die dazu geeignet ist, dass sie nahe der Referenzfläche angeordnet und durch ein Fügemittel (22) mit der unteren Fläche (2a; 101a) des Hauptlastlagerkörpers (2; 101; 151; 201) gekoppelt werden kann.

11. Fuß (1; 100; 150; 200) nach Anspruch 10, wenn Anspruch 10 von Anspruch 4 abhängig ist, **dadurch gekennzeichnet, dass** die Antischlupf- und/oder Antivibrationsbasis (21; 121) eine Durchgangszentraldurchbrechung (23) aufweist, die symmetrisch in Bezug auf die Hauptlängsachse (Y) angeordnet ist und mit dem Zentralgehäuse (7; 120; 157; 207) des Hauptlastlagerkörpers (2; 101; 151; 201) kommuniziert, wobei der Kopplungsblock (9; 113; 156; 206) und das Verstellmittel (4; 103; 153; 203) teilweise in die Durchgangszentraldurchbrechung (23) untergebracht sind, wenn das Betätigungsmittel (5; 104; 154; 204) das Verstellmittel (4; 103; 153; 203) in der Ruheposition positioniert, wobei es in Bezug auf eine untere Wand (21a) der Antischlupf- und/oder Antivibrationsbasis (21; 121) vollständig wieder eingetreten ist, und das Verstellmittel (4; 103; 153; 203) durch die Durchgangszentraldurchbrechung (23) gelangt, wenn das Betätigungsmittel (5; 104; 154; 204) das Verstellmittel (4; 103; 153; 203) in der Betriebsposition positioniert, wobei es von der unteren Wand (21a) der Antischlupf- und/oder Antivibrationsbasis (21; 121) vorragt.

12. Fuß (100; 200) nach Anspruch 4, **dadurch gekennzeichnet, dass** der Querstift (105; 209) infolge seiner Rotation um eine Zusatzlängsachse (X') im Wesentlichen parallel zu der linearen Rotationsachse (X) drehend betätigbar ist, wobei er versehen ist, mit:
- einem Hauptabschnitt (111), der in dem Längsschlitz (106) enthalten ist und der in der Ruheposition des Verstellmittels (103; 203) mit dem Verstellmittel (103; 203) durch ein Schlüsselmittel (112) gekoppelt ist und der eine Außenfläche (111a) aufweist, die progressiv mit dem Kopplungsblock (113; 206) zusammenwirkt, wenn der Querstift (105; 209) von der passiven Position in die aktive Position gelangt und das Verstellmittel (103; 203) von der Ruheposition in die Betriebsposition gelangt;
- einen Griffkopf (114), der an einem ersten Ende (105b) des Querstifts (105; 209) angeordnet und von der Außenseite zugänglich ist, so dass er in Rotation durch den Bediener mittels eines Werkzeugs betätigt werden kann.

13. Fuß (100; 200) nach Anspruch 12, **dadurch gekennzeichnet, dass** das Schlüsselmittel (112) umfasst:
- eine Zentralkerbe (115), die in der Außenfläche (111a) des Hauptabschnitts (111) des Querstifts (105; 209) ausgebildet und symmetrisch in Bezug auf die Hauptlängsachse (Y) koaxial zu dem Zentralsitz (116) des Kopplungsblocks (113; 206) angeordnet ist;
- einen Kopfabschnitt (117) des Kopplungsblocks (113; 206), der mit der Zentralkerbe (115) gepaart ist.

## Revendications

1. Pied de support et de stabilisation (1 ; 100 ; 150 ; 200) de charges lourdes telles que, en particulier, des machines industrielles, comprenant :
un corps porteur principal (2 ; 101 ; 151 ; 201) qui, dans des conditions d'application, est approprié pour insister sur une surface de référence et pour être fermement couplé à un bâti de base d'une charge lourde par le biais de moyens de fixation (3 ; 102 ; 152) ;
des moyens de translation (4 ; 103 ; 153 ; 203) couplés avec ledit corps porteur principal (2 ; 101, 151 ; 201) et raccordés de manière opérationnelle aux moyens d'actionnement (5 ; 104 ; 154 ; 204) couplés avec ledit corps porteur principal (2 ; 101 ; 151 ; 201) et appropriés pour être manipulés par l'opérateur pour positionner lesdits moyens de translation (4 ; 103 ; 153 ; 203) entre une position de repos dans laquelle lesdits moyens de translation (4 ; 103 ; 153 ; 203) sont totalement contenus dans les dimensions globales définies par ledit corps porteur principal (2 ; 101 ; 151 ; 201) et une position opérationnelle dans laquelle lesdits moyens de translation (4 ; 103 ; 153 ; 203) restent fermement en saillie vers le bas et au moins partiellement à partir dudit corps porteur principal (2 ; 101, 151 ; 201) et sont en contact avec ladite surface de référence pour permettre à l'opérateur le déplacement manuel immédiat de ladite charge lourde,
**caractérisé en ce que** :
lesdits moyens de translation (4 ; 103 ; 153 ; 203) sont couplés audit corps porteur principal (2 ; 101 ; 151 ; 201) par le biais de moyens de contrainte (6 ; 155 ; 205) et sont agencés au niveau d'un logement central (7 ; 120 ; 157 ; 207) communiquant avec l'extérieur et commençant à partir de la surface inférieure (2a ; 101a) dudit corps principal (2 ; 101, 151 ; 201), lesdits moyens de translation (4 ; 103 ; 153) étant totalement contenus dans ledit logement central (7 ; 120, 157 ; 207) lorsqu'ils adoptent ladite position de repos, dans lequel lesdits moyens d'actionnement (104 ; 204) comprennent une broche transversale (105 ; 209) au moins partiellement insérée dans une fente longitudinale (106) réalisée dans ledit corps porteur principal (101 ; 201) et mobile au moins entre une position passive dans laquelle ladite broche transversale (105 ; 209) est à l'opposé desdits moyens de translation (103 ; 203) de sorte que lesdits moyens de translation (103 ; 203) adoptent ladite position de repos, et une position active dans laquelle la paroi externe (105a) de ladite broche transversale (105 ; 209) coopère avec lesdits moyens de translation (103 ; 203) les maintenant dans ladite position opérationnelle, faisant au moins partiellement saillie de ladite surface inférieure (101a) dudit corps porteur principal (101 ; 201).

2. Pied (1 ; 100 ; 150 ; 200) selon la revendication 1, **caractérisé en ce que** lesdits moyens de translation (4 ; 103 ; 153 ; 203) comprennent un galet de guidage (8 ; 107) définissant un axe de rotation linéaire (X) sensiblement horizontal et parallèle au plan défini par ladite surface de référence.

3. Pied (1 ; 100 ; 150 ; 200) selon la revendication 1 ou 2, **caractérisé en ce que** lesdits moyens de contrainte (6 ; 155 ; 205) comprennent :
un bloc de couplage (9 ; 113 ; 156 ; 206) qui, dans l'une quelconque des positions desdits moyens de translation (4 ; 103 ; 153 ; 203), reste toujours au moins partiellement contenu dans ledit logement central (7 ; 120 ; 157 ; 207) dudit corps porteur principal (2 ; 101 ; 151 ; 201) à l'intérieur duquel ledit bloc de couplage (9 ; 113 ; 156 ; 206) coulisse grâce auxdits moyens d'actionnement (5 ; 104 ; 154 ; 204) ;
un petit arbre transversal (10) couplé avec ledit bloc de couplage (9 ; 113 ; 156 ; 206) supportant lesdits moyens de translation (4 ; 103 ; 153 ; 203) afin de permettre la rotation autour d'un axe linéaire (X) sensiblement horizontal et parallèle au plan défini par ladite surface de référence.

4. Pied (1 ; 100 ; 150 ; 200) selon la revendication 3, **caractérisé en ce que** ledit bloc de couplage (9 ; 113 ; 156 ; 206) présente un siège central (11 ; 116) qui se développe de manière coaxiale vers ledit logement central (7 ; 120 ; 157 ; 207) et symétriquement par rapport à un axe longitudinal principal (Y) orthogonal par rapport audit axe linéaire (X) et dans lequel lesdits moyens de translation (4 ; 103 ; 153 ; 203) sont au moins partiellement logés dans n'importe quelle position opérationnelle, agencés de manière symétrique par rapport audit axe longitudinal central (Y).

5. Pied (1 ; 100 ; 150 ; 200) selon la revendication 4, **caractérisé en ce que** ledit bloc de couplage (9 ; 113 ; 156 ; 206) est composé d'une partie centrale (12) et de deux parties latérales (13, 14) se faisant face et étant éloignées l'une de l'autre, raccordées au niveau d'une extrémité par le biais de ladite partie centrale (12) afin de définir ledit siège central (11 ; 116) et de conférer audit bloc de couplage (9 ; 113 ; 156 ; 206) un profil se présentant sensiblement sous la forme d'un U retourné, en section transversale et dans des conditions d'application.

6. Pied (150 ; 200) selon l'une quelconque des revendications précédentes, **caractérisé en ce qu'**il comprend des moyens de rotation (158 ; 208) raccordés de manière opérationnelle avec ledit corps porteur principal (151 ; 201) et coopérant mécaniquement avec lesdits moyens de translation (153 ; 203) afin de leur faire faire une pirouette et retournant librement dans l'espace et permettre ainsi de déplacer ladite charge lourde dans n'importe quelle direction.

7. Pied (150) selon la revendication 6, lorsque la revendication 6 dépend de la revendication 3, **caractérisé en ce que** lesdits moyens de rotation (158) comprennent un palier de recirculation de billes en saillie (159), intercalé entre ledit bloc de couplage (156) et lesdits moyens d'actionnement (154) avec lesquels il est toujours en contact et contenu dans ledit logement central (157) dudit corps porteur principal (151).

8. Pied (200) selon la revendication 6, lorsque la revendication 6 dépend de la revendication 3, **caractérisé en ce que** lesdits moyens de rotation (208) comprennent un couplage mécanique avec un léger jeu entre ledit bloc de couplage (206) et ledit corps porteur principal (201), ledit couplage mécanique étant approprié pour permettre la rotation dudit bloc de couplage (206) autour d'un axe longitudinal principal (Y) orthogonal par rapport audit axe linéaire (X) sensiblement horizontal et parallèle au plan défini par ladite surface de référence.

9. Pied (200) selon la revendication 8, **caractérisé en ce que** ledit bloc de couplage (206) présente une paroi supérieure (206a) légèrement convexe appropriée pour favoriser une rotation dudit bloc de couplage (206) autour dudit axe longitudinal principal (Y).

10. Pied (1 ; 100 ; 150 ; 200) selon l'une quelconque des revendications précédentes, **caractérisé en ce que** ledit corps porteur principal (2 ; 101 ; 151 ; 201) est prévu avec une base anti-glissement et/ou anti-vibration (21 ; 121) appropriée pour être agencée à proximité de ladite surface de référence et couplée par le biais de moyens de joint (22), avec la surface inférieure (2a ; 101a) dudit corps porteur principal (2 ; 101 ; 151 ; 201).

11. Pied (1 ; 100 ; 150 ; 200) selon la revendication 10, lorsque la revendication 10 dépend de la revendication 4, **caractérisé en ce que** ladite base anti-glissement et/ou anti-rotation (21 ; 121) présente une ouverture centrale débouchante (23), agencée symétriquement par rapport audit axe longitudinal principal (Y) et communiquant avec ledit logement central (7 ; 120 ; 157 ; 207) dudit corps porteur principal (2 ; 101 ; 151 ; 201), ledit bloc de couplage (9 ; 113 ; 156 ; 206) et lesdits moyens de translation (4 ; 103 ; 153 ; 203) étant partiellement logés dans ladite ouverture centrale débouchante (23) lorsque lesdits moyens d'actionnement (5 ; 104 ; 154 ; 204) positionnent lesdits moyens de translation (4 ; 103 ; 153 ; 203) dans ladite position de repos, rentrés à nouveau totalement par rapport à la paroi inférieure (21a) de la base anti-glissement et/ou anti-vibration (21 ; 121), et lesdits moyens de translation (4 ; 103 ; 153 ; 203) passant par ladite ouverture centrale débouchante (23) lorsque lesdits moyens d'actionnement (5 ; 104 ; 154 ; 204) positionnent lesdits moyens de translation (4 ; 103 ; 153 ; 203) dans ladite position opérationnelle, faisant saillie de ladite paroi inférieure (21a) de ladite base anti-glissement et/ou anti-vibration (21 ; 121).

12. Pied (100 ; 200) selon la revendication 4, **caractérisé en ce que** ladite broche transversale (105 ; 209) est mobile de façon rotative à cause de sa rotation autour d'un axe longitudinal auxiliaire (X') sensiblement parallèle audit axe de rotation linéaire (X), qui est prévue avec :
une partie principale (111) qui est contenue dans ladite fente longitudinale (106) et qui, dans ladite position de repos desdits moyens de translation (103 ; 203), est couplée avec lesdits moyens de translation (103 ; 203) par le biais de moyens de clé (112) et qui présente une surface externe (111a) coopérant progressivement avec ledit bloc de couplage (113 ; 206) lorsque ladite broche transversale (105 ; 209) passe de ladite position passive à ladite position active et que lesdits moyens de translation (103 ; 203) passent de ladite position de repos à ladite position opérationnelle ;
une tête de poignée (114) agencée au niveau d'une première extrémité (105b) de ladite broche transversale (105 ; 209) et accessible depuis l'extérieur afin d'être actionnée en rotation par l'opérateur au moyen d'un outil.

13. Pied (100 ; 200) selon la revendication 12, **caractérisé en ce que** les moyens de clé (112) comprennent :
une encoche centrale (115) réalisée dans ladite surface externe (111a) de ladite partie principale (111) de ladite broche transversale (105 ; 209) et agencée symétriquement par rapport audit axe longitudinal principal (Y), coaxial par rapport audit siège central (116) dudit bloc de couplage (113 ; 206) ;
une partie de tête (117) dudit bloc de couplage (113 ; 206) conjuguée dans ladite encoche centrale (115).
